# EUROPEAN PATENT APPLICATION

(11) **EP 3 211 689 A1**
(43) Date of publication of application: **30.08.2017**
(21) Application number: 15851789.6
(22) Date of filing: 20.07.2015
(51) Int. Cl.: H01M 2/10

(54) **GARDENING TOOL PORTABLE POWER SOURCE**

(30) Priority: 23.10.2014 CN 201420614573 U
(71) Applicant: Changzhou Globe Co., Ltd., Jiangsu 213023 (CN)
(72) Inventor: JI, Zhenggan, Chang Zhou Jiangsu 213023 (CN)
(74) Representative: Becker Kurig Straus
(86) International application number: PCT/CN2015/084525
(87) International publication number: WO 2016/062131

(57) **Abstract**

A mobile power supply for garden tools includes a strap structure and a power supply device. The strap structure includes a waist strap, and a shoulder strap provided on the waist strap. The power supply device is provided on one side of the waist strap. The power supply device includes a power source, a fabric case, and a dummy power source. The power source is provided in the fabric case. This can separate an actual power source from a garden tool, and transfer a large portion of the weight of the garden tool by placing the actual power source on the waist of a user. This uses other parts of the human body to bear the weight of the power source, and reduces the need for user's arm strength. It is easier to operate the garden tools, and therefore can extend the labor time.

## Description

### FIELD OF THE TECHNOLOGY

The present application relates to the field of garden tool technology, and specifically relates to a mobile power supply for garden tools.

### BACKGROUND

Most of the existing garden tools, especially tools that require lifting by the hands of an operator, adopt direct insertion of power supply in the garden tool as a source of power. Hence, during operation of the garden tool, an operator not only needs to use the strength of the hands to operate the garden tool, the weight of the garden tool also includes the weight of the power source. As we all know, the weight of a power source could be a few kilograms and is too heavy for the hands of the operator. The operator would become very tired after working for one whole day.

### SUMMARY

An object of the present application is to provide a mobile power supply for garden tools that can separate an actual power source from the garden tool, and transfer a large portion of the weight of the garden tool by placing the actual power source on the waist of a human body. This allows the use of other parts of the human body to bear the weight of the power source, and reduces the need for user's arm strength. Hence, it is easier to operate the garden tool, and can greatly extend the labor time.

According to one aspect, there is provided a mobile power supply for garden tools having a strap structure and a power supply device, the strap structure including a waist strap and a shoulder strap provided on the waist strap, the power supply device being provided on one side of the waist strap, the power supply device including a power source, a fabric case, and a dummy power source, and the power source being provided in the fabric case.

In a preferred embodiment, the fabric case is provided on the waist strap.

In a preferred embodiment, the power source and the dummy power source are connected together via a data connecting cable.

In a preferred embodiment, the data connecting cable is fixed to the fabric case, and is connected to the power source in the fabric case.

In a preferred embodiment, the dummy power source is a data transmission and installation device.

The present application discloses a mobile power supply for garden tools. It can separate an actual power source from the garden tool, and transfer a large portion of the weight of the garden tool by placing the actual power source on the waist of a human body. This allows the use of other parts of the human body to bear the weight of the power source, and reduces the need for user's arm strength. Hence, it is easier to operate the garden tool, and can greatly extend the labor time.

### BRIEF DESCRIPTION OF THE DRAWINGS

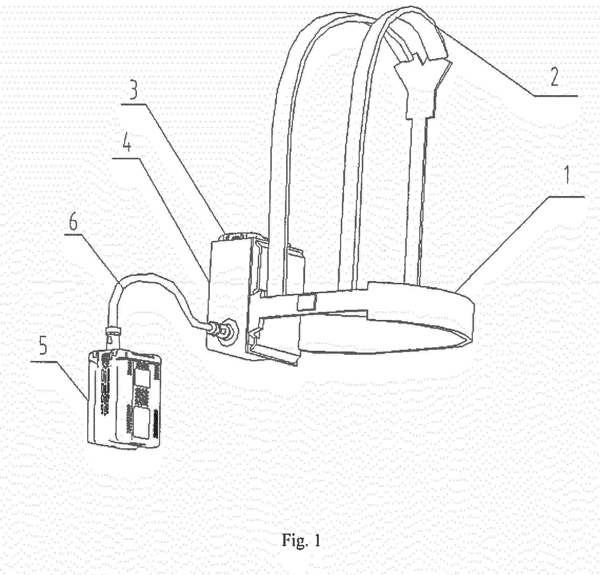

The Figure is a schematic view of a preferred embodiment of the mobile power supply for garden tools of the present application. The reference numerals in the drawing and their designating features are as follows: 1 - waist strap, 2 - shoulder strap, 3 - power source, 4 - fabric case, 5 - dummy power source, 6 - data connecting cable.

### DETAILED DESCRIPTION

A preferred embodiment of the mobile power supply for garden tools will be described below in detail so that the advantage and characteristics of the mobile power supply for garden tools can be more easily understood by those skilled in the art, and the scope of protection of the mobile power supply for garden tools can be more clearly defined.

Referring to the figure, the present application discloses a mobile power supply for garden tools which may include a strap structure and a power supply device.

The strap structure may include a waist strap 1, and a shoulder strap 2 provided on the waist strap 1. The power supply device can be provided on one side of the waist strap 1.

The power supply device may include a power source 3, a fabric case 4, and a dummy power source 5. The power source 3 may be provided in the fabric case 4.

Furthermore, the fabric case 4 may be provided on the waist strap 1.

Furthermore, the power source 3 and the dummy power source 5 may be connected together through a data connecting cable 6.

Furthermore, the data connecting cable 6 may be fixed to the fabric case 4, and may be connected to the power source 3 in the fabric case 4.

Furthermore, the dummy power source 5 can be a data transmission and installation device.

The mobile power supply for garden tools of the present application focuses on solving the problem of separating the power source from the garden tool machine itself, and reducing the total weight of the machine by making use of other parts of the human body to bear the weight of the power source. The mobile power supply for garden tools of the present application mainly places the power source on a waist strap fastened around the waist of a user. It is similar to wearing a waist pack by a traveler, and is light and relaxing.

The principle is to install a dummy power source on the garden tool machine to replace the actual power source, and use a data connecting cable to transmit signals from the actual power source to the dummy power source. The garden tool machine can work normally. There is no actual power source inside the dummy power source, which only serves the purposes of data transmission and installation.

The actual power source can be provided on the waist strap. The waist strap can be wide and strong. The actual power source can be supported by the strength of the waist. Thus, the weight of the actual power source can be completely kept away from the hands of a user such that the hands only bear the weight of the garden tool machine.

In many garden tools, the weight of the power source is almost the same as the weight of the garden tool. Thus, the weight of the garden tool to be borne by the hands is half of that of the traditional garden tool. Thus, operation of the garden tool with the mobile power supply of the present application will be much easier than the operation of the traditional garden tool.

The present application discloses a mobile power supply for garden tools. It can separate an actual power source from the garden tool, and transfer a large portion of the weight of the garden tool by placing the actual power source on the waist of a human body. This allows the use of other parts of the human body to bear the weight of the power source, and reduces the need for user's arm strength. Hence, it is easier to operate the garden tool, and can greatly extend the labor time.

The above-mentioned embodiments are merely specific embodiments of the mobile power supply for garden tools of the present application, but the scope of protection is not limited to these embodiments. Any change or substitution made by a person skilled in the art, without resorting to creativity, would be covered by the scope of protection of the mobile power supply for garden tools of the present application. Therefore, the scope of protection should be based on the scope of protection defined by the appended claims.

## Claims

1. A mobile power supply for garden tools, comprising a strap structure and a power supply device, the strap structure comprising a waist strap and a shoulder strap provided on the waist strap, the power supply device being provided on one side of the waist strap, the power supply device comprising a power source, a fabric case, and a dummy power source, and the power source being provided in the fabric case.

2. The mobile power supply for garden tools according to claim 1, wherein the fabric case is provided on the waist strap.

3. The mobile power supply for garden tools according to claim 1, wherein the power source and the dummy power source are connected together via a data connecting cable.

4. The mobile power supply for garden tools according to claim 3, wherein the data connecting cable is fixed to the fabric case, and is connected to the power source in the fabric case.

5. The mobile power supply for garden tools according to claim 1, wherein the dummy power source is a data transmission and installation device.
